# EUROPEAN PATENT APPLICATION

(11) **EP 4 474 685 A1**
(43) Date of publication of application: **11.12.2024**
(21) Application number: 23201612.1
(22) Date of filing: 04.10.2023
(51) Int. Cl.: F16K 15/14, B29C 45/14, B29C 45/16, H01M 50/325

(54) **UMBRELLA VALVE WITH OVERMOLDED CORE**

(30) Priority: 07.06.2023 US 202318330509
(71) Applicant: Freudenberg-NOK General Partnership, Plymouth, MI 48170-2455 (US)
(72) Inventor: LEE, Jeremy, Indianapolis, 46237 (US)
(74) Representative: Schaumburg und Partner Patentanwälte mbB

(57) **Abstract**

An umbrella valve includes a wall structure (14) having an aperture and a passage adjacent to the aperture. A core member (22) includes a body portion (24) with a shoulder (26) and a retention clip (28) extending from the body portion and including a pair of flexible legs (30) supporting a respective one of a pair of retention flanges (32) spaced a predetermined distance from the shoulder. The retention clip is received in the aperture in the wall structure. An umbrella-shaped valve member (40) is over-molded to the core member. The umbrella-shaped valve member includes a convex surface (42) facing in a direction away from the wall structure (14) and a concave surface (44) facing in a direction towards the wall structure. An outer peripheral edge (46) of the umbrella-shaped valve member is disposed against the one face of the wall structure (14) surrounding the passage.

## Description

### FIELD

The present disclosure relates to an umbrella valve with overmolded core.

### BACKGROUND

This section provides background information related to the present disclosure which is not necessarily prior art.

Because of the growing EV market and market demands, I have designed a valve that better meets a wider range of specifications and demands. Similar current capabilities of some current products but this invention eases installation, which is currently operator and/or machine input dependent. The operator is not able to determine if the current state of the art inventions is fully seated or retained without visually inspecting the underside of the valve. This is impossible for most contained systems (battery pack applications). This could cause the operator to think the seal is installed when it is not. With the current designs, there is a small allowance for variation in the application wall thickness and tolerancing. Most of the EV market utilizes aluminum extrusion for their battery pack walls. This cheap design creates challenges for mating components that require tight tolerances to be held throughout.

### SUMMARY

This section provides a general summary of the disclosure, and is not a comprehensive disclosure of its full scope or all of its features.

According to an aspect of the present disclosure, an umbrella valve includes a wall structure having an aperture and a passage adjacent to the aperture. A core member includes a body portion with a shoulder and a retention clip extending from the body portion and including a pair of flexible legs supporting a respective one of a pair of retention flanges spaced a predetermined distance from the shoulder. The retention clip is received in the aperture in the wall structure with the shoulder opposing one face of the wall structure and the pair of retention flanges opposing another face of the wall structure. An umbrella-shaped valve member is over-molded to the core member. The umbrella-shaped valve member includes a convex surface facing in a direction away from the wall structure and a concave surface facing in a direction towards the wall structure. An outer peripheral edge of the umbrella-shaped valve member is disposed against the one face of the wall structure surrounding the passage.

According to a further aspect, the core member is made from plastic.

According to a further aspect, the core member is made from metal.

According to a further aspect, the umbrella-shaped valve member is formed from an elastomeric material that is over-molded to define a bead over the shoulder of the core member.

According to a further aspect, the wherein the umbrella-shaped valve member is bonded to the core body.

According to a further aspect, the wherein the umbrella-shaped valve member is mechanically locked to the core body.

According to a further aspect, the passage in the wall structure includes a plurality of passages separated by a radial web structure having a center hub that defines the aperture.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a cross-sectional view of the umbrella valve according to the principles of the present disclosure;
FIG. 2 is a top perspective view of the umbrella valve shown in FIG. 1;
FIG. 3 is a bottom perspective view of the umbrella valve shown in FIG. 1;
FIG. 4 is a cross-sectional bottom perspective view of the umbrella valve shown in FIG. 1;
FIG. 5 is a cross-sectional view of the umbrella valve according to the principles of the present disclosure; and
FIG. 6 is a cross-sectional view of the umbrella valve according to the principles of the present disclosure.

Corresponding reference numerals indicate corresponding parts throughout the several views of the drawings.

### DETAILED DESCRIPTION

Example embodiments will now be described more fully with reference to the accompanying drawings.

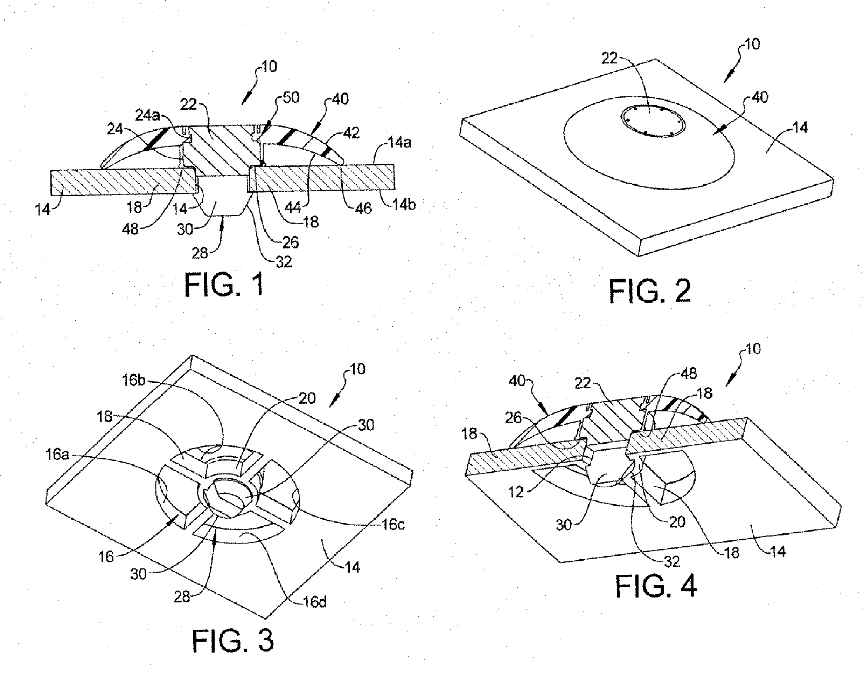

With reference to FIGS. 1-4, an umbrella valve 10 according to the principles of the present disclosure will now be described. The umbrella valve 10 is designed to be received in an aperture 12 of wall structure 14. The wall structure 14 includes passage 16 adjacent to the aperture 12. The passage 16 can include a plurality of passages 16a-16d separated by a radial web structure 18 having a center hub 20 that defines the aperture 12.

The umbrella valve 10 includes a core member 22 having a body portion 24 with a shoulder 26. A retention clip 28 extends from the body portion 24 and includes a pair of flexible legs 30. The pair of flexible legs 30 each support a respective one of a pair of retention flanges 32 spaced a predetermined axial distance from the shoulder 26. Although a pair of flexible legs 30 are shown, more than two flexible legs could be used. The retention clip 28 is received in the aperture 12 in the wall structure 14 with the shoulder 26 opposing one face 14a of the wall structure 14 and the pair of retention flanges 32 opposing another face 14b of the wall structure 14. The core member 22 can be made from plastic, metal or ceramic.

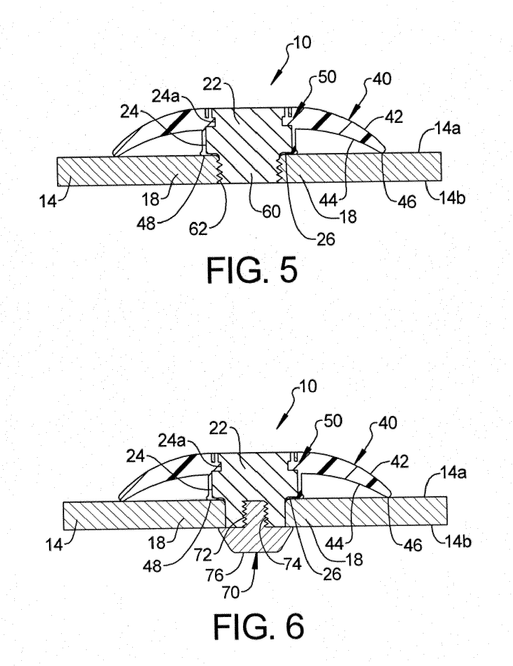

With reference to FIGS. 5 and 6, the retention clip 28 can also be replaced with a threaded fastener 60 that is received in the aperture 62. As shown in FIG. 5, the threaded fastener 60 can be integral with the core member 22 and extending from the shoulder 26 for engaging the aperture 62 that can also be threaded. As shown in FIG. 6, the threaded fastener 70 can also be made separate from the core member 22 and can have a threaded shaft 72 threadedly engaged with a threaded aperture 74 in the core and have a flange/head 76 that opposes the shoulder 26.

An umbrella-shaped valve member 40 is over-molded to the core member 22. The umbrella-shaped valve member 40 has a convex surface 42 facing in a direction away from the wall structure 14 and a concave surface 44 facing in a direction towards the wall structure 14. An outer peripheral edge 46 of the umbrella-shaped valve member 40 is disposed against a face 14a of the wall structure 14 surrounding the passages 16a-16d. The outer perimeter edge 46 of the umbrella-shaped valve member 40 can be radiused. The umbrella-shaped valve member 40 can be made from an elastomeric material such as rubber or silicone. The elastomeric material that is over-molded to the body portion 24 of the core 22 can define a bead 48 over the shoulder 26 of the core member 22.

The umbrella-shaped valve member 40 can be bonded to the core member 22 by the over-molding process and or by an adhesive. The body portion 24 of the core member 22 can further include a recessed annular groove 24a for providing a mechanical lock 50 between the umbrella shaped valve member 40 and the core member 22.

The umbrella valve 10 contains an over molded core 22 with a clip type feature 28 for connection with a determined height for proper installation. The over molded core 22 is paired with a rubber or silicone umbrella valve 40. This is combined with an axial bead 48 under the shoulder 26 of the core 22 that interfaces with the surface 14a of the wall structure 14 to allow for variance while still sealing. The umbrella valve 10 also features a mechanical locking mechanism 50 of the rubber to the core component. This acts as a redundant mechanical and chemical bond of the rubber 40 to the core member 22. The present umbrella valve 10 improves the existing designs by preventing incorrect installation by utilization a tactile response of the core component. There is a positive stop of the core member 22 that does not exist with an all-rubber valve. The operator will also be able to tell if the axial bead 48 is seated due to the valve 10 bouncing back out of the application bore 12 if not fully seated. This design does not need lubrication during installation which means no potential for contamination inside the contained area. The core member 22 creates a more robust locking/retaining system due to the axial sealing feature 48. This will allow for larger variation for retention in the application wall 14 due to application variance, while still sealing. Lower overall insertion force is required due the general lower coefficient of friction of the core member 22 material in comparison to rubber. The installation will have little effect on the contact pressure on the outer diameter 46 of the umbrella valve 10. The contact pressure can have a large preload due to the design on the core element 22 that is not available with an all-rubber component. The umbrella valve 10 can be made to any size based on application seal and flow requirements. The umbrella valve 10 is suitable for use as a vent valve for a battery pack.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An umbrella valve, comprising:
a wall structure having an aperture and a passage adjacent to the aperture;
a core member having a body portion with a shoulder and a retention clip extending from the body portion and including a pair of flexible legs supporting a respective one of a pair of retention flanges spaced a predetermined distance from the shoulder, the retention clip being received in the aperture in the wall structure with the shoulder opposing one face of the wall structure and the pair of retention flanges opposing another face of the wall structure; and
an umbrella-shaped valve member over-molded to the core member, the umbrella-shaped valve member having a convex surface facing in a direction away from the wall structure and a concave surface facing in a direction towards the wall structure, wherein an outer peripheral edge of the umbrella-shaped valve member is disposed against the one face of the wall structure surrounding the passage.

2. The umbrella valve according to claim 1, wherein the core member is made from plastic.

3. The umbrella valve according to claim 1, wherein the core member is made from metal.

4. The umbrella valve according to claim 1, wherein the core member is made from ceramic.

5. The umbrella valve according to claim 1, wherein the umbrella-shaped valve member is formed from an elastomeric material that is over-molded to define a bead over the shoulder of the core member.

6. The umbrella valve according to claim 1, wherein the wherein the umbrella-shaped valve member is bonded to the core body.

7. The umbrella valve according to claim 1, wherein the wherein the umbrella-shaped valve member is mechanically locked to the core body.

8. The umbrella valve according to claim 1, wherein the passage in the wall structure includes a plurality of passages separated by a radial web structure having a center hub that defines the aperture.

9. The umbrella valve according to claim 1, wherein an outer perimeter edge of the umbrella-shaped valve member is radiused.

10. An umbrella valve, comprising:
a wall structure having an aperture and a passage adjacent to the aperture;
a core member having a body portion with a shoulder and a retention member extending from the body portion and including a retention flange spaced a predetermined distance from the shoulder, the retention member being received in the aperture in the wall structure with the shoulder opposing one face of the wall structure and the retention flange opposing another face of the wall structure; and
an umbrella-shaped valve member over-molded to the core member, the umbrella-shaped valve member having a convex surface facing in a direction away from the wall structure and a concave surface facing in a direction towards the wall structure, wherein an outer peripheral edge of the umbrella-shaped valve member is disposed against the one face of the wall structure surrounding the passage.

11. The umbrella valve according to claim 10, wherein the core member is made from plastic.

12. The umbrella valve according to claim 10, wherein the core member is made from metal.

13. The umbrella valve according to claim 10, wherein the core member is made from ceramic.

14. The umbrella valve according to claim 10, wherein the umbrella-shaped valve member is formed from an elastomeric material that is over-molded to define a bead over the shoulder of the core member.

15. The umbrella valve according to claim 10, wherein the umbrella-shaped valve member is bonded to the core body.

16. The umbrella valve according to claim 10, wherein the umbrella-shaped valve member is mechanically locked to the core body.

17. The umbrella valve according to claim 10, wherein the passage in the wall structure includes a plurality of passages separated by a radial web structure having a center hub that defines the aperture.

18. The umbrella valve according to claim 10, wherein an outer perimeter edge of the umbrella-shaped valve member is radiused.

19. An umbrella valve, comprising:
a wall structure having an aperture and a passage adjacent to the aperture;
a core member having a body portion with a shoulder and a retention member extending from the body portion, the retention member being threadedly received in the aperture in the wall structure; and
an umbrella-shaped valve member over-molded to the core member, the umbrella-shaped valve member having a convex surface facing in a direction away from the wall structure and a concave surface facing in a direction towards the wall structure, wherein an outer peripheral edge of the umbrella-shaped valve member is disposed against a face of the wall structure surrounding the passage.
